# EUROPÄISCHE PATENTSCHRIFT

(11) **EP 3 984 347 B1**
(45) Veröffentlichungstag und Bekanntmachung des Hinweises auf die Patenterteilung: **30.10.2024**
(21) Anmeldenummer: 21195551.3
(22) Anmeldetag: 08.09.2021
(51) Int. Cl.: A01D 63/02

(54) **SCHNEIDWERK MIT SEITLICHEN FÖRDERHILFEN**
CUTTING DEVICE WITH LATERAL CONVEYING AIDS
MÉCANISME DE COUPE POURVU DE DISPOSITIFS LATÉRAUX D'AIDE AU TRANSPORT

(30) Priorität: 08.09.2020 DE 102020123350
(43) Veröffentlichungstag der Anmeldung: 20.04.2022
(73) Patentinhaber: Carl Geringhoff GmbH & Co. KG, 59227 Ahlen (DE)
(72) Erfinder: Sudhues, Steffen, 59227 Ahlen (DE); Tiessen, Reimer, 26135 Oldenburg (DE); Pokriefke, Michael, 27798 Hude (DE); Hanskötter, Werner, 59320 Ennigerloh (DE); Pütter, Hans, 57439 Attendorn (DE); Hartmann, Christoph, 59320 Ennigerloh (DE)
(74) Vertreter: Weeg, Thomas

(56) Entgegenhaltungen:
- EP-A1- 2 992 751
- EP-A1- 3 603 379
- DE-U1- 8 114 378
- US-A- 3 508 387

## Beschreibung

Die vorliegende Erfindung bezieht sich auf ein Schneidwerk zum Anbau an eine landwirtschaftliche Erntemaschine mit einem Rahmen, zumindest einem auf der in Arbeitsrichtung weisenden Seite des Schneidwerks angeordneten und mit dem Rahmen verbundenen Schneidorgan, an den seitlichen gegenüberliegenden Enden des Schneidwerks angeordneten Halmteilern, die durch ihre Position eine Arbeitsbreite des Schneidwerks bestimmen, rotierend antreibbaren Förderhilfen, die mit ihren unteren Enden auf den Halmteilern gelagert sind, einer auf der der Arbeitsrichtung entgegengesetzten Seite des Schneidwerks angeordneten Übergabeöffnung, zumindest einer Fördereinrichtung zur Abförderung von geschnittenem Erntegut von einer Schnittzone zur Übergabeöffnung, und Antriebsvorrichtungen zum Antrieb des zumindest einen Schneidorgans, der zumindest einen Fördereinrichtung und der Förderhilfen.

Ein gattungsgemäßes Schneidwerk ist aus der Schrift GB 684 829 bekannt. Die an den gegenüberliegenden Enden des Schneidwerks positionierten Halmteiler tauchen bei der Vorfahrt der Erntemaschine, an die das Schneidwerk im Erntebetrieb angebaut ist, in Arbeitsrichtung in den stehenden Bestand des Ernteguts ein, um einerseits die noch von der Arbeitsbreite des Schneidwerks zu erfassenden Stängel und Halme des Ernteguts den Schneidorganen zuzuleiten und andererseits die an der Schnittkante stehenden Stängel und Halme des Ernteguts, die nicht mehr von den Schneidorganen erfasst werden sollen, von den Schneidorganen entfernt zu halten. Bei einer sauberen Trennung des Ernteguts an der Schnittkante entlang schneiden die Schneidorgane das Erntegut an den seitlichen Rändern sauber ab und übergeben es verlustfrei und ohne Störungen im Gutfluss an die Förderorgane.

Um den Aufbau von Erntegut im Bereich der Halmteiler zu vermeiden, befinden sich vor den in Arbeitsrichtung des Schneidwerks weisenden Stirnkanten der Seitenwände auf den Halmteilern gelagerte, rotierend angetriebene Förderhilfen in Gestalt von spiralförmig gebogenen Stangen. Die Förderhilfen erstrecken sich nahezu über die gesamte Länge des Schneidwerks und sind mechanisch von Keilriemen angetrieben, die sich auf der Rückseite des Schneidwerksrahmens befinden. Die drehend angetriebenen Förderhilfen verbessern die Ablage des geschnittenen Fördergutes auf den Förderorganen.

Das in der Schrift GB 684 829 offenbarte Schneidwerk verfügt über eine für den Straßentransport unkritische Länge und Breite. Für dieses Schneidwerk stellte sich also das Problem nicht, die Länge und/oder Breite des Schneidwerks so weit zu verringern, dass die für die Zulassung zum Straßenverkehr geltenden Grenzwerte eingehalten werden können.

Aus der Schrift US 3 508 387 A ist ein Erntevorsatz zur Ernte von in Reihen stehendem Erntegut bekannt, bei dem jeder Einzugskanal seitlich von einer Förderschnecke begrenzt ist, um die Maisstängel beim Schnitt seitlich besser abzustützen.

Aus der Schrift EP 2 992 751 A1 ist eine Pickup-Vorrichtung zur Aufnahme von Zuckerrüben aus einer Miete bekannt. Die Aufnahmebreite der Pickup kann durch schwenkbare Einweiser verbreitert werden, die in ihrer Gebrauchsstellung seitlich über die Arbeitsbreite der Pickup überstehen und die für die Straßenfahrt wieder in eine Stellung zurückverschwenkt werden können, in der sie sich innerhalb der Projektion der Pickup in Fahrtrichtung befinden.

Die Schrift DE 81 14 378.8 offenbart eine Zuckerrohrerntemaschine mit einem Halmteiler, der auf einer Führungskulisse querverschieblich gelagert ist.

Die Schrift EP 3 603 379 A1 offenbart ein Schneidwerk mit einem rotierend antreibbaren Halmteiler, dessen Antrieb in einem automatisierten Betrieb an- und abschaltbar ausgestaltet ist. Die Halmteiler sind in Abhängigkeit von der Lenkrichtung der das Schneidwerk tragenden Erntemaschine um ihre Hochachse schwenkbeweglich.

Schneidwerke neuerer Bauart verfügen allerdings über Arbeitsbreiten, die die gesetzlichen Grenzwerte für die Zulassung zum Straßenverkehr weit überschreiten. Es ist deshalb üblich, die Schneidwerke mit eigenen Schneidwerkswagen über öffentliche Straßen zu transportieren, auf die die Schneidwerke so aufgelegt sind, dass sie sich mit ihrer Arbeitsbreite entlang der Längsachse des Schneidwerkswagens erstrecken. Die Länge der Schneidwerke in ihrer Arbeitsrichtung ist dabei so bemessen, dass sie die gesetzlichen Vorgaben für die für den öffentlichen Verkehr maximal zulässigen Breite noch einhalten. Sind die Schneidwerke allerdings noch mit Halmteilern versehen, die in Arbeitsrichtung über die Schneidorgane des Schneidwerks, wie beispielsweise einen Messerbalken, überstehen, überschreitet die Länge solcher Schneidwerke die für den Straßenverkehr maximal zulässige Breite. Um die gesetzlichen Vorgaben gleichwohl einzuhalten, sind die Halmteiler klappbar ausgestaltet, so dass sie für den Straßentransport über die Seitenwände auf einfache Weise hochgeschwenkt oder seitlich umgeklappt und beispielsweise an den Messerbalken angelegt werden können.

Ist der Halmteiler allerdings mit einer angetriebenen Förderhilfe versehen, stellt sich das Problem, dass eine solche Förderhilfe wegen der Antriebe nicht einfach verschwenkt werden kann. Entweder ist die Förderhilfe deshalb in einer für die Funktion nachteiligen nach hinten zurückgesetzten Position fest am Schneidwerk angebracht, mit der die Werte für die maximal zulässigen Breite eingehalten werden, oder die Antriebe müssen jedes Mal von den Förderhilfen getrennt werden, bevor auch die Förderhilfen in eine Position geschwenkt werden können, in der sie die für die Zulassung zum öffentlichen Straßenverkehr maximal zulässige Breite einhalten.

Es ist deshalb die Aufgabe der vorliegenden Erfindung, eine Lösung für die Ausbildung und Anordnung von Förderhilfen zu finden, mit der die gesetzlichen Vorgaben für die für eine Zulassung zum Straßenverkehr maximal zulässigen Maße auf eine möglichst einfache Weise eingehalten werden können.

Die Aufgabe wird für ein gattungsgemäßes Schneidwerk gelöst, indem die Halmteiler zusammen mit den darauf gelagerten Förderhilfen jeweils um eine zumindest annähernd vertikale Drehachse aus der Arbeitsstellung in eine Nichtgebrauchsstellung beweglich mit dem Rahmen verbunden und die Antriebe der Förderhilfen als hydraulische oder elektrische Antriebe ausgestaltet sind, die über flexible Anschlussleitungen mit dem Rahmen verbunden sind.

Trotz der auf den Halmteilern gelagerten Förderhilfen ist es auf einfache Weise möglich, die Länge eines auf einen Schneidwerkswagen aufgelegten Schneidwerks für den Straßentransport zu verringern, indem die Halmteiler zusammen mit den Förderhilfen mit einer einfachen Schwenkbewegung aus ihrer Arbeitsstellung in eine Nichtgebrauchsstellung verschwenkt werden. Während sich die Halmteiler in der Arbeitsstellung in Arbeitsrichtung erstrecken, liegen sie nach der Verschwenkung um die zumindest annähernd vertikale Drehachse in der Nichtgebrauchsstellung in einer Position quer zur Arbeitsrichtung. Weil die Antriebe der Förderhilfen als hydraulische oder elektrische Antriebe ausgestaltet sind, die über flexible Anschlussleitungen mit dem Rahmen verbunden und mit Antriebsleistung versorgt sind, ist es nicht erforderlich, für die Verschwenkung irgendwelche Antriebe zu trennen oder gesonderte Montagearbeiten vorzunehmen, wie das für mechanische Antriebe erforderlich wäre. Die flexiblen Anschlussleitungen wie Hydraulikschläuche oder Elektrokabel passen sich bei einer Verschwenkbewegung der Halmteiler mit den Förderhilfen einfach an die jeweilige neue Schwenkstellung an, wenn diese ausreichend lang bemessen sind, um die Schwenkbewegung nicht zu behindern.

Bei der Montage einer Förderhilfe auf einem Halmteiler ergibt sich der weitere Vorteil, dass die Förderhilfe zusammen mit dem Halmteiler in einem Arbeitsgang an das Schneidwerk an- oder abgebaut werden kann. Die Verbindungen zwischen dem Rahmen des Schneidwerks und den Halmteilern können dabei ausgelegt sein für eine werkzeuglose Montage und Demontage. Die Schnittstelle zwischen den Halmteilern und dem Rahmen des Schneidwerks können dabei auch so ausgelegt sein, dass an der Schnittstelle anstelle eines Halmteilers auch beispielsweise ein Rapstrennmesser oder ein anderes Anbaugerät befestigt werden kann. Für das Rapstrennmesser oder ein anderes Anbaugerät können dann dieselben Anschlüsse für deren Antrieb genutzt werden wie für die Förderhilfen.

Durch die Abstützung und Lagerung der Förderhilfen auf den Halmteilern erfolgt die Höhenführung der Förderhilfen ebenfalls über die Halmteiler. Es ist keine gesonderte Höhenführung erforderlich. Die Höhenführung kann beispielsweise über einen am jeweiligen Halmteiler befestigten Schleifschuh erfolgen. Bei einer höhenbeweglichen Anlenkung des Halmteilers am Rahmen des Schneidwerks kann der Halmteiler dann der Bodenkontur über die Bodenabtastung mit dem Schleifschuh folgen. Dabei bleibt die Förderwirkung der Förderhilfen auch bei Auslenkbewegungen des Halmteilers unverändert erhalten. Der Antrieb der Förderhilfen kann von oben oder unten her erfolgen.

Wenn in der vorliegenden Beschreibung und den Ansprüchen von "vorne" die Rede ist, so ist das auf das Schneidwerk bezogen der Bereich, der in Arbeitsrichtung des Schneidwerks gesehen dem zu erntenden Erntegut am nächsten liegt, während mit der Angabe "hinten" der Bereich des Schneidwerks gemeint ist, der auf der entgegengesetzten Seite des Schneidwerks am weitesten entfernt ist von dem zu erntenden Erntegut. Wenn von der Breite des Schneidwerks die Rede ist, so bezieht sich diese Angabe immer auf die Erstreckung des Schneidwerks quer zur Arbeitsrichtung, während mit der Länge des Schneidwerks die Erstreckung in einer Richtung parallel zur Arbeitsrichtung gemeint ist.

Nach einer Ausgestaltung der Erfindung weisen die Förderhilfen eine Kegel- oder Kegelstumpf-Grundform mit einem geschlossenen Mantel auf und sind mit ihrem schlankeren Ende nach unten weisend auf den Halmteilern gelagert. Durch die Verbreiterung der Grundform nach oben hin entsteht bei zunehmender Höhe, in der Getreidehalme oder Stängel an der Oberfläche der Förderhilfe anliegen, eine zunehmend stärkere in eine seitliche Richtung wirkende Kraftkomponente, durch die die Getreidehalme oder Stängel zur Seite zunehmend stark weggedrückt werden, und zwar entweder auf die Förderorgane des Schneidwerks zu oder vom Schneidwerk zur Seite weg. Sind die Getreidehalme oder Stängel bereits geschnitten, erzeugen die Förderhilfen einen Kraftimpuls, durch den die Getreidehalme oder Stängel in Richtung der Förderorgane geworfen werden. Durch den geschlossenen Mantel wird vermieden, dass sich Erntegut in irgendwelchen Öffnungen oder Bauteilen verhakt und sich dann um die Achse der Förderhilfe wickeln könnte. Das Risiko eines Materialaufbaus an den in Fahrtrichtung weisenden Kanten der Seitenwände ist dadurch zumindest verringert.

Nach einer Ausgestaltung der Erfindung rotieren die Förderhilfen jeweils um eine Drehachse, die sich in der Arbeitsstellung der Halmteiler zumindest annähernd in einer Richtung parallel zur Arbeitsrichtung erstreckt, und die Drehachse ist mit ihrem oberen Ende in eine der Arbeitsrichtung entgegengesetzte Richtung geneigt. Bei der Vorfahrt der Erntemaschine in den Bestand des Ernteguts hinein taucht die Förderhilfe mit ihrem in Arbeitsrichtung der Erntemaschine gesehen vorderen Ende bodennah in den Bestand ein. Insbesondere bei Lagergetreide wird der Bestand dabei von unten her unterfasst. Bei der weiteren Vorfahrt der Erntemaschine wandern die Kontaktflächen der Förderhilfe an derselben Stelle des Ackers nach oben. Dabei werden flach liegende Getreidehalme und Stängel zunehmend angehoben und voneinander getrennt, insbesondere, wenn diese quer zur Arbeitsrichtung der Erntemaschine liegen. Durch die Schrägstellung der Drehachse ist eine schonende Trennung des vor dem Schneidwerk liegenden Erntegutbestands zwischen zu schneidendem und nicht zu schneidendem Erntegut möglich.

Nach einer Ausgestaltung der Erfindung sind die Förderhilfen jeweils in einem Tragrahmen gehalten, der sich in einer zumindest annähernd parallelen Richtung zur Drehachse der zugehörigen Förderhilfe erstreckt, der an seinem unteren Ende auf dem zugehörigen Halmteiler ortsfest, aber in einem Drehpunkt drehbeweglich gelagert ist und der in einem von seinem vorderen Ende entfernten Abschnitt mit einem Koppelelement am Halmteiler oder am Rahmen befestigt ist, wobei das Koppelelement in verschiedenen Höhenlagen mit dem Halmteiler oder dem Rahmen verbindbar ist. Über die in verschiedenen Höhenlagen befestigbaren Koppelelemente sind die Förderhilfen in verschiedenen Anstellwinkeln zum Boden und zum Halmteiler festlegbar und betreibbar. Anstellwinkel zwischen 40° und 70° haben sich als besonders geeignet erwiesen. Bei einer Veränderung des Anstellwinkels der Förderhilfen kann der Anstellwinkel der Halmteiler am Rahmen des Schneidwerks konstant bleiben. Eine Bedienperson der Erntemaschine kann die Förderhilfen durch die Auswahl und Einstellung eines geeigneten Anstellwinkels optimal an die jeweiligen Ernteverhältnisse anpassen. Es ist auch möglich, den Anstellwinkel der Förderhilfen fernbetätigbar motorisch zu verstellen, indem an das Koppelelement ein motorisch längenvariables Verstellelement angreift.

Nach einer Ausgestaltung der Erfindung sind auf die Mäntel der Förderhilfen ein oder mehrere durchgängige Schneckengänge aufgesetzt. Durch die von den Mänteln der Förderhilfen abstehenden Schneckengänge sind die Förderhilfen förderaktiver. In Matten auf dem Acker liegendes Lagergetreide kann beispielsweise besser aufgelöst und aufgeteilt werden.

Nach einer Ausgestaltung der Erfindung sind die Förderhilfen über die Länge des Schneidwerks in Arbeitsrichtung gesehen zu mehr als der Hälfte, bevorzugt zu mehr als drei Vierteln ihrer Länge, nochmals bevorzugt mit ihrer vollen Länge vor dem Schneidorgan in dem Halmteilern gehalten. Die Lagerung der Förderhilfen in den Halmteilern ermöglicht es, mit den vorderen Enden der Förderhilfen mit der Teilung des Ernteguts an einem Arbeitspunkt zu beginnen, der in Arbeitsrichtung des Schneidwerks gesehen deutlich nach vorne vor das Schneidorgan vorverlagert ist. Dabei ist es vorteilhaft, den Arbeitspunkt so weit nach vorne zu legen, dass mehr als die Hälfte, bevorzugt mehr als drei Viertel der Länge, nochmals bevorzugt die volle Länge der Förderhilfen vor dem Schneidorgan liegt. Durch die Vorverlagerung der Förderhilfen nach vorne ist es möglich, die Teilung des Ernteguts vollständig abzuschließen, bevor dann das Erntegut von dem Schneidorgan wie beispielsweise einem Messerbalken geschnitten wird. Durch diese Bauweise ist ein sauberer Schnitt entlang einer sauber getrennten Bestandskante auch bei Lagergetreide möglich.

Nach einer Ausgestaltung der Erfindung sind die Förderhilfen nur an ihren unteren Enden fliegend in den Halmteilern gelagert. In den Halmteilern ist dazu ein Aufnahmeschuh ausgebildet, der die unteren Enden der Förderhilfen nach außen hin abschirmt, um dort einen Materialaufbau und ein Wickeln von Erntegut zu verhindern. In dem Aufnahmeschuh kann der Antrieb der jeweiligen Förderhilfe angeordnet sein, der dann durch den Aufnahmeschuh ebenfalls nach außen hin geschützt ist. Die nur einseitige fliegende Lagerung ist gewichts- und kostensparend. Die nur einseitige Lagerung ist ausreichend funktionssicher und langzeitstabil, weil die aus dem Erntegut an den Förderhilfen angreifenden Kräfte vergleichsweise gering sind.

Nach einer Ausgestaltung der Erfindung sind die Antriebe an den unteren Enden der Förderhilfen in den Halmteilern angeordnet. Der Schneckengang der Förderhilfe kann durchgängig gestaltet werden. Der Halmteiler kann flach und leicht konstruiert werden, es ist nicht erforderlich, noch eine nach oben aufragende Halterung für den Antrieb vorzusehen. Der Antrieb kann insbesondere im Aufnahmeschuh angeordnet werden, durch den der Antrieb gegen einen Fremdkörperkontakt abgeschirmt werden kann. Der Antrieb ist zusammen mit dem Halmteiler und der Förderhilfe verschwenkbar. Gesonderte Rüstarbeiten zum Umbau des Antriebs von der Erntestellung auf den Straßentransport und wieder zurück in die Erntestellung sind nicht erforderlich. Die Verstellung erfolgt mit der Verschwenkung des Halmteilers.

Weitere Merkmale der Erfindung ergeben sich aus den Ansprüchen, den Figuren und der nachfolgenden gegenständlichen Beschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1:: eine Ansicht von schräg vorne auf ein Schneidwerk,
- Fig. 2:: eine vergrößerte Ansicht auf ein seitliches Ende des Schneidwerks, und
- Fig. 3:: eine Ansicht auf ein seitliches Ende des Schneidwerks von oben,

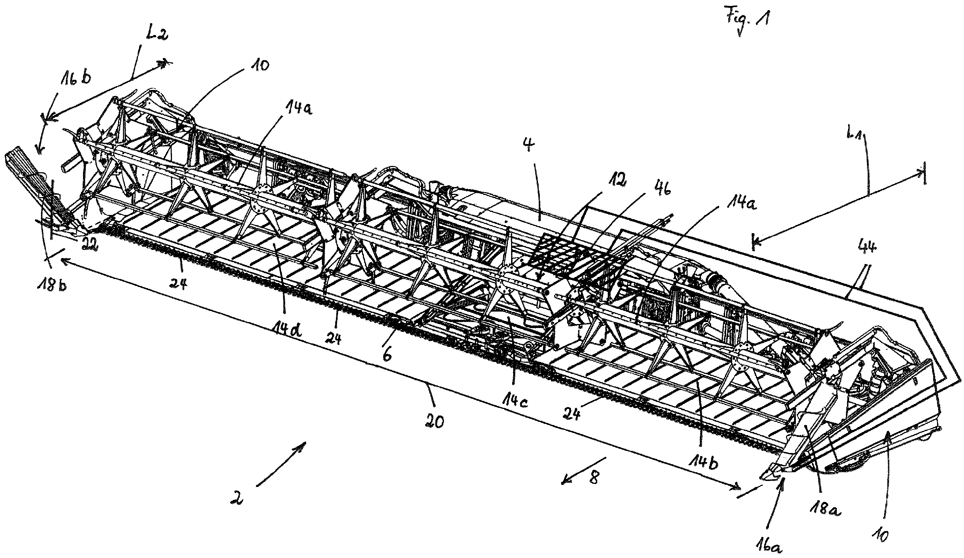

In Fig. 1 ist eine Ansicht von schräg vorne auf ein Schneidwerk 2 gezeigt. Das Schneidwerk 2 verfügt über einen Rahmen 4, der die Bauteile des Schneidwerks 2 trägt. Mit dem Rahmen 4 kann das Schneidwerk 2 an eine zeichnerisch nicht näher dargestellte Erntemaschine wie beispielsweise einen Mähdrescher oder Feldhäcksler angebaut werden.

Auf der Vorderseite des Schneidwerks 2 befindet sich zumindest ein Schneidorgan 6, im Ausführungsbeispiel ist dies ein Messerbalken, der sich über die Arbeitsbreite 20 des Schneidwerks 2 erstreckt. Um Erntegut abzuschneiden und abzufördern, wird das Schneidwerk 2 von der Erntemaschine in die Arbeitsrichtung 8 bewegt. Dabei wird das Erntegut vom Schneidorgan 6 geschnitten, von den Fördervorrichtungen 14a, 14b, 14c, 14d erfasst und von der Schnittzone 24 zur Übergabeöffnung 12 transportiert, wo das Erntegut dann an die Erntemaschine abgegeben wird. Im Ausführungsbeispiel finden sich als Fördervorrichtungen die Haspel 14a sowie drei endlos umlaufende Bandförderer 14b, 14c und 14d, von denen die beiden äußeren Bandförderer 14b und 14d das Erntegut von den Enden 10 des Schneidwerks 2 her bis zum mittigen Bandförderer 14c befördern, der das dort gesammelte Erntegut dann nach hinten durch die Übergabeöffnung 12 an die dahinter befindliche Erntemaschine abfördert. Anstelle von Bandförderern 14 b, 14c, 14d können auch andere Arten von Fördereinrichtungen 14 verwendet werden, so beispielsweise auch Förderschnecken und dergleichen.

An den seitlichen Enden 10 des Schneidwerks 4 befinden sich Halmteiler 16a, 16b, die nach vorne in Arbeitsrichtung 8 über die Vorderkante des Schneidorgans 6 hervorstehen. Auf die beiden Halmteiler 16a, 16b ist jeweils eine Förderhilfe 18a 18b aufgesetzt. Im gezeigten Ausführungsbeispiel bestehen die Förderhilfen 18a, 18b aus kegelstumpfförmigen Körpern mit einer geschlossenen Hülle, die rotierend antreibbar sind. Die Halmteiler 16a 16b mit den Förderhilfen 18a, 18b begrenzen seitlich die Arbeitsbreite 20 des Schneidwerks 2.

In Fig. 1 ist der Halmteiler 16a in der Arbeitsposition gezeigt, in der der Halmteiler 16a mit seiner vorderen Spitze in die Arbeitsrichtung 8 weist. Der Halmteiler 16b ist in einer eingeklappten Stellung gezeigt, in der der Halmteiler 16b um eine vertikale Drehachse 22 um 90° nach innen in eine Nichtgebrauchsstellung verschwenkt worden ist. Durch die Verschwenkung des Halmteilers 16b in die Nichtgebrauchsstellung verkürzt sich die Länge des Schneidwerks 2 von dem Maß L1 auf das Maß L2. Mit dem Maß L2 können die gesetzlichen Vorgaben für die maximal zulässige Breite von Anhängern im Straßenverkehr eingehalten werden.

In Fig. 1 ist erkennbar, dass mit dem Halmteiler 16b auch die Förderhilfe 18b um 90° verschwenkt worden ist. Da die Förderhilfen 18a, 18b jeweils in den Halmteilern 16a, 16b gelagert sind, ist es nicht erforderlich, diese separat von den Halmteilern 16a, 16b zu verschwenken, um die Länge des Schneidwerks 2 zu verringern.

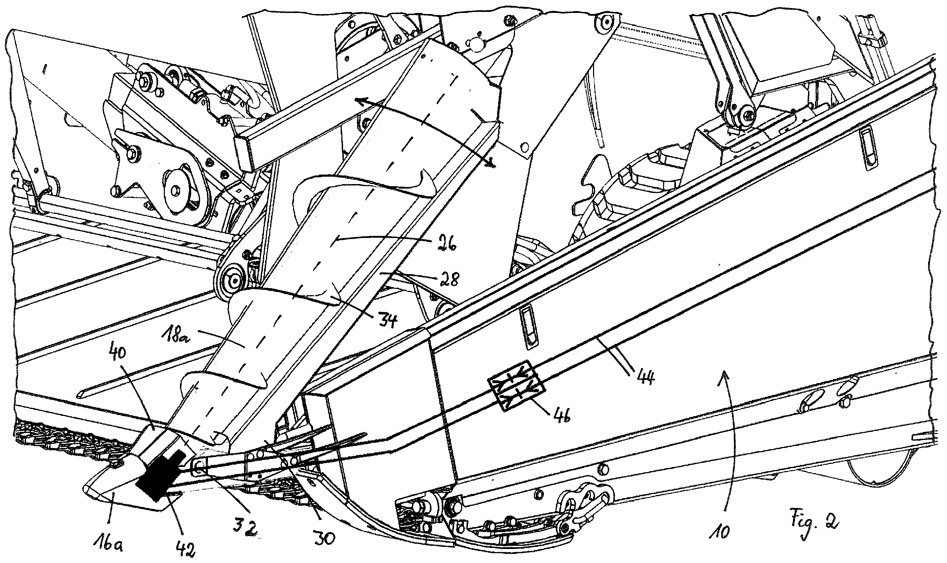

In Fig. 2 ist eine vergrößerte Ansicht auf ein seitliches Ende 10 des Schneidwerks 2 gezeigt. In dieser vergrößerten Ansicht ist der Halmteiler 16a mit der darauf gelagerten Förderhilfe 18a gut erkennbar. Die Förderhilfe 18a verfügt über eine Kegelstumpf-Grundform mit einem geschlossenen Mantel. Sie ist mit ihrem schlankeren Ende nach unten weisend auf dem Halmteiler 16a gelagert. Die Förderhilfe 18a rotiert um eine in der Fig. 2 mit einer gestrichelten Linie angedeutete Drehachse 26, die sich in der in Fig. 2 gezeigten Arbeitsstellung des Halmteilers 16a zumindest annähernd in einer Richtung parallel zur Arbeitsrichtung 8 erstreckt. Die Förderhilfe 18a ist in ihrer Arbeitsstellung so positioniert, dass sich ihre Drehachse 26 mit ihrem oberen Ende in eine der Arbeitsrichtung 8 entgegengesetzte Richtung neigt.

In der vergrößerten Ansicht in Fig. 2 ist außerdem erkennbar, dass die Förderhilfe 18a in einem Tragrahmen 28 gehalten ist, der sich in einer zumindest annähernd parallelen Richtung zur Drehachse 26 der zugehörigen Förderhilfe 18a erstreckt. Der Tragrahmen 28 ist an seinem unteren Ende auf dem zugehörigen Halmteiler 16a ortsfest, aber in einem Drehpunkt 32 drehbeweglich gelagert. In einem von seinem vorderen Ende entfernten Abschnitt ist der Tragrahmen 28 mit einem Koppelelement 30 am Halmteiler 16 befestigt. Das Koppelelement 30 ist beispielsweise über eine zeichnerisch nicht näher dargestellte Langlochführung in verschiedenen Höhenlagen mit dem Halmteiler 16a verbindbar. Dadurch ist es möglich, die Förderhilfe 18a in verschiedenen Winkelstellungen im Verhältnis zum Ackerboden auszurichten, wie durch den Doppelpfeil in Fig. 2 angedeutet ist.

In Fig. 2 ist auch erkennbar, dass auf dem Mantel der Förderhilfe 18a ein durchgängiger Schneckengang 34 aufgesetzt ist. Bei einer Drehbewegung der Förderhilfen 18 unterstützen die Schneckengänge 34 die Trennung des Ernteguts in eine Fraktion, die vom Schneidorgan 6 geschnitten werden soll, und eine andere Fraktion, die als Schnittkante des Ernteguts bei der weiteren Vorfahrt der Erntemaschine noch nicht geschnitten werden soll.

In Fig. 2 ist noch der Aufnahmeschuh 40 erkennbar, mit dem die Lagerung der Förderhilfe 18a im Halmteiler 16a abgedeckt ist. Im Aufnahmeschuh 40 befindet sich auch ein Antrieb 42 für die Förderhilfe 18. Der Antrieb 42 ist über flexible Leitungen 44 mit dem Rahmen 4 des Schneidwerks 2 verbunden.

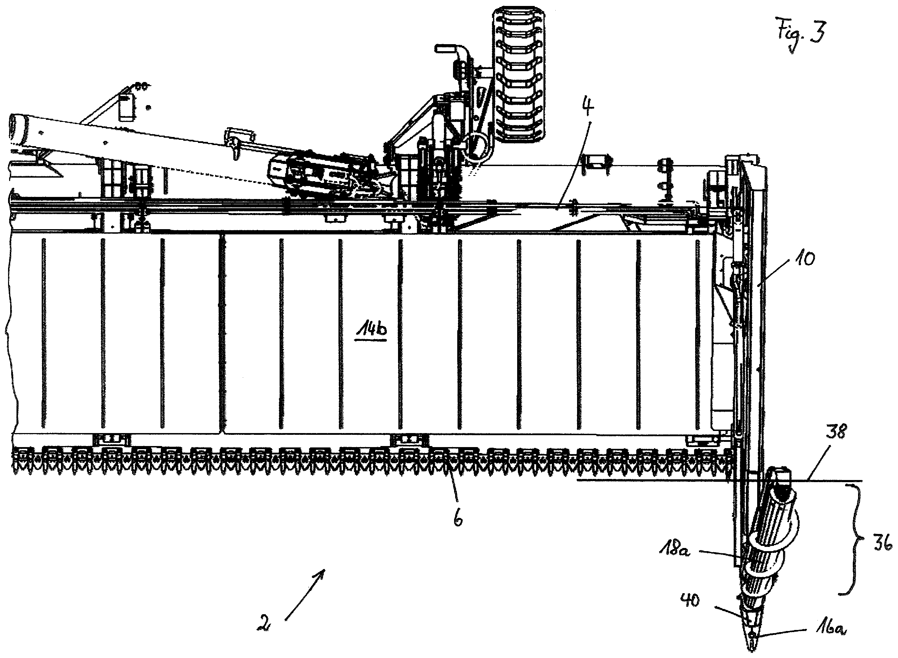

In Fig. 3 ist eine Ansicht auf ein seitliches Ende 10 des Schneidwerks 2 von oben gezeigt. Aus der Ansicht von oben ist erkennbar, dass sich in der Arbeitsstellung des Halmteilers 16a die Förderhilfe 18a mit ihrer gesamten Baulänge 36 noch vor der Linie 38 befindet, die an die Vorderkante des Schneidorgans 6 angelegt ist und in Figur seitlich über das Ende 10 des Schneidwerks 2 hinausgeführt ist. Die Ansicht von oben verdeutlicht auf diese Weise, dass die Aufteilung des vor dem Schneidwerk 2 befindlichen Ernteguts zwischen einer Fraktion, die von dem Schneidorgan 6 geschnitten werden soll und einer zweiten Fraktion, die als Schnittkante stehen bleiben soll, abgeschlossen ist, bevor das Schneidorgan 6 bei der weiteren Vorfahrt der Erntemaschine die entsprechenden Getreidehalme oder Stängel erreicht.

Am Rahmen 4 befindet sich ein Hydraulikblock 46, an dem die im Ausführungsbeispiel hydraulischen Leitungen 44 an den Hydraulikkreislauf des Schneidwerks 2 angeschlossen werden können.

### Bezugsziffernliste:

- 2: Schneidwerk
- 4: Rahmen
- 6: Schneidorgan
- 8: Arbeitsrichtung
- 10: Enden des Schneidwerks
- 12: Übergabeöffnung
- 14: Fördereinrichtung
- 16: Halmteiler
- 18: Förderhilfe
- 20: Arbeitsbreite
- 22: vertikale Drehachse
- 24: Schnittzone
- 26: Drehachse (Förderhilfe)
- 28: Tragrahmen
- 30: Koppelelement
- 32: Drehpunkt
- 34: Schneckengang
- 36: Baulänge
- 38: Linie
- 40: Aufnahmeschuh
- 42: Antrieb
- 44: Leitung
- 46: Hydraulikblock

## Patentansprüche

1. Schneidwerk (2) zum Anbau an eine landwirtschaftliche Erntemaschine mit einem Rahmen (4), zumindest einem auf der in Arbeitsrichtung (8) weisenden Seite des Schneidwerks (2) angeordneten und mit dem Rahmen (4) verbundenen Schneidorgan (6), an den seitlichen gegenüberliegenden Enden (10) des Schneidwerks (2) angeordneten Halmteilern (16), die durch ihre Position eine Arbeitsbreite (20) des Schneidwerks (2) bestimmen, rotierend antreibbaren Förderhilfen (18), die mit ihren unteren Enden auf den Halmteilern (16) gelagert sind, einer auf der der Arbeitsrichtung (8) entgegengesetzten Seite des Schneidwerks (2) angeordneten Übergabeöffnung (12), zumindest einer Fördereinrichtung (14) zur Abförderung von geschnittenem Erntegut von einer Schnittzone (24) zur Übergabeöffnung (12), und Antriebsvorrichtungen zum Antrieb des zumindest einen Schneidorgans (6), der zumindest einen Fördereinrichtung (14) und der Förderhilfen (18), **dadurch gekennzeichnet, dass** die Halmteiler (16) zusammen mit den darauf gelagerten Förderhilfen (18) jeweils um eine zumindest annähernd vertikale Drehachse (22) aus der Arbeitsstellung in eine Nichtgebrauchsstellung beweglich mit dem Rahmen (4) verbunden und die Antriebe (42) der Förderhilfen (18) als hydraulische oder elektrische Antriebe ausgestaltet sind, die über flexible Anschlussleitungen mit dem Rahmen (4) verbunden sind.

2. Schneidwerk (2) nach Anspruch 1, **dadurch gekennzeichnet, dass** die Förderhilfen (18) eine Kegel- oder Kegelstumpf-Grundform mit einem geschlossenen Mantel aufweisen und mit ihrem schlankeren Ende nach unten weisend auf den Halmteilern (16) gelagert sind.

3. Schneidwerk (2) nach Anspruch 1 oder 2, **dadurch gekennzeichnet, dass** die Förderhilfen (18) jeweils um eine Drehachse (26) rotieren, die sich in der Arbeitsstellung der Halmteiler (16) zumindest annähernd in einer Richtung parallel zur Arbeitsrichtung (8) erstreckt und die Drehachse (26) mit ihrem oberen Ende in eine der Arbeitsrichtung (8) entgegengesetzte Richtung geneigt ist.

4. Schneidwerk (2) nach Anspruch 3, **dadurch gekennzeichnet, dass** die Förderhilfen (18) jeweils in einem Tragrahmen (28) gehalten sind, der sich in einer zumindest annähernd parallelen Richtung zur Drehachse (26) der zugehörigen Förderhilfe (18) erstreckt, der an seinem unteren Ende auf dem zugehörigen Halmteiler (16) ortsfest, aber in einem Drehpunkt drehbeweglich gelagert ist und der in einem von seinem vorderen Ende entfernten Abschnitt mit einem Koppelelement (30) am Halmteiler (16) oder am Rahmen (4) befestigt ist, wobei das Koppelelement (30) in verschiedenen Höhenlagen mit dem Halmteiler (16) oder dem Rahmen (4) verbindbar ist.

5. Schneidwerk (2) nach einem der vorhergehenden Ansprüche, **dadurch gekennzeichnet, dass** auf die Mäntel der Förderhilfen (18) ein oder mehrere durchgängige Schneckengänge (34) aufgesetzt sind.

6. Schneidwerk (2) nach einem der vorhergehenden Ansprüche, **dadurch gekennzeichnet, dass** die Förderhilfen (18) über die Länge des Schneidwerks (2) in Arbeitsrichtung (8) gesehen zu mehr als der Hälfte, bevorzugt zu mehr als drei Vierteln ihrer Länge, nochmals bevorzugt mit ihrer vollen Länge vor dem Schneidorgan (6) in dem Halmteilern (16) gehalten sind.

7. Schneidwerk (2) nach einem der vorhergehenden Ansprüche, **dadurch gekennzeichnet, dass** die Förderhilfen (18) nur an ihren unteren Enden fliegend in den Halmteilern (16) gelagert sind.

8. Schneidwerk (2) nach einem der vorhergehenden Ansprüche, **dadurch gekennzeichnet, dass** die Antriebe (42) an den unteren Enden der Förderhilfen (18) in den Halmteilern (16) angeordnet sind.

## Claims

1. Cutting device (2) for attaching to an agricultural harvesting machine, comprising a frame (4), at least one cutting member (6) which is arranged on the side of the cutting device (2) facing in the working direction (8) and which is connected to the frame (4), crop dividers (16) which are arranged on the laterally opposing ends (10) of the cutting device (2) and which determine a working width (20) of the cutting device (2) by their position, rotatably drivable conveying aids (18) which are mounted with their lower ends on the crop dividers (16), a transfer opening (12) which is arranged on the side of the cutting device (2) opposing the working direction (8), at least one conveying device (14) for transporting cut crops from a cutting zone (24) to the transfer opening (12), and drive devices for driving the at least one cutting member (6), the at least one conveying device (14) and the conveying aids (18), **characterized in that** the crop dividers (16) together with the conveying aids (18) mounted thereon are connected in each case to the frame (4) so as to be movable about an at least approximately vertical axis of rotation (22) from the working position into a non-use position, and the drives (42) of the conveying aids (18) are designed as hydraulic or electrical drives which are connected to the frame (4) via flexible connecting lines.

2. Cutting device (2) according to Claim 1, **characterized in that** the conveying aids (18) have a conical or frustoconical basic shape with a closed lateral surface and are mounted with their narrower end facing downwardly on the crop dividers (16).

3. Cutting device (2) according to Claim 1 or 2, **characterized in that** the conveying aids (18) in each case rotate about an axis of rotation (26) which extends in the working position of the crop dividers (16) at least approximately in a direction parallel to the working direction (8) and the axis of rotation (26) is inclined with its upper end in a direction opposing the working direction (8).

4. Cutting device (2) according to Claim 3, **characterized in that** the conveying aids (18) are held in each case in a support frame (28) which extends in a direction at least approximately parallel to the axis of rotation (26) of the associated conveying aid (18), which is mounted fixedly at its lower end on the associated crop divider (16) but so as to be rotatably movable at a pivot point, and which is fastened to the crop divider (16) or to the frame (4) in a portion remote from its front end by a coupling element (30), wherein the coupling element (30) can be connected at various vertical positions to the crop divider (16) or the frame (4) .

5. Cutting device (2) according to one of the preceding claims, **characterized in that** one or more continuous screw flights (34) are positioned on the lateral surfaces of the conveying aids (18).

6. Cutting device (2) according to one of the preceding claims, **characterized in that**, when viewed over the length of the cutting device (2) in the working direction (8), the conveying aids (18) are held over more than half, preferably over more than three quarters, of their length, further preferably over their entire length, upstream of the cutting member (6) in the crop divider (16) .

7. Cutting device (2) according to one of the preceding claims, **characterized in that** the conveying aids (18) are cantilevered in the crop dividers (16) only at their lower ends.

8. Cutting device (2) according to one of the preceding claims, **characterized in that** the drives (42) are arranged at the lower ends of the conveying aids (18) in the crop dividers (16).

## Revendications

1. Mécanisme de coupe (2) destiné à être disposé sur une machine de récolte agricole, avec un cadre (4), au moins un organe de coupe (6) agencé sur le côté du mécanisme de coupe (2) orienté dans la direction de travail (8) et relié au cadre (4), des diviseurs de tige (16) agencés aux extrémités latérales opposées (10) du mécanisme de coupe (2), qui déterminent par leur position une largeur de travail (20) du mécanisme de coupe (2), des auxiliaires de transport (18) pouvant être entraînés en rotation, qui sont montés avec leurs extrémités inférieures sur les diviseurs de tiges (16), une ouverture de transfert (12) agencée sur le côté du mécanisme de coupe (2) opposé à la direction de travail (8), au moins un appareil de transport (14) pour l'évacuation de produit de récolte coupé d'une zone de coupe (24) vers l'ouverture de transfert (12), et des dispositifs d'entraînement pour l'entraînement de l'au moins un organe de coupe (6), de l'au moins un appareil de transport (14) et des auxiliaires de transport (18), **caractérisé en ce que** les diviseurs de tiges (16) sont reliés au cadre (4), conjointement avec les auxiliaires de transport (18) montés sur eux, de manière mobile respectivement autour d'un axe de rotation (22) au moins approximativement vertical, de la position de travail à une position de non-utilisation, et les entraînements (42) des auxiliaires de transport (18) sont conçus sous forme d'entraînements hydrauliques ou électriques qui sont reliés au cadre (4) par l'intermédiaire de conduites de raccordement flexibles.

2. Mécanisme de coupe (2) selon la revendication 1, **caractérisé en ce que** les auxiliaires de transport (18) présentent une forme de base conique ou tronconique avec une enveloppe fermée et sont montés sur les diviseurs de tiges (16) avec leur extrémité la plus mince dirigée vers le bas.

3. Mécanisme de coupe (2) selon la revendication 1 ou 2, **caractérisé en ce que** les auxiliaires de transport (18) tournent respectivement autour d'un axe de rotation (26) qui, dans la position de travail des diviseurs de tiges (16), s'étend au moins approximativement dans une direction parallèle à la direction de travail (8) et l'axe de rotation (26) est incliné avec son extrémité supérieure dans une direction opposée à la direction de travail (8).

4. Mécanisme de coupe (2) selon la revendication 3, **caractérisé en ce que** les auxiliaires de transport (18) sont maintenus respectivement dans un cadre porteur (28) qui s'étend dans une direction au moins approximativement parallèle à l'axe de rotation (26) de l'auxiliaire de transport (18) correspondant, qui est fixe à son extrémité inférieure sur le diviseur de tiges (16) correspondant, mais qui est monté de manière mobile en rotation sur un point de rotation et qui, dans une section éloignée de son extrémité avant, est fixé par un élément de couplage (30) au diviseur de tiges (16) ou au cadre (4), l'élément de couplage (30) pouvant être relié à différentes positions de hauteur au diviseur de tiges (16) ou au cadre (4).

5. Mécanisme de coupe (2) selon l'une quelconque des revendications précédentes, **caractérisé en ce qu'**un ou plusieurs filets de vis sans fin continus (34) sont placés sur les enveloppes des auxiliaires de transport (18) .

6. Mécanisme de coupe (2) selon l'une quelconque des revendications précédentes, **caractérisé en ce que** les auxiliaires de transport (18) sont maintenus, sur la longueur du mécanisme de coupe (2), dans la direction de travail (8), sur plus de la moitié, de préférence sur plus des trois quarts de leur longueur, de préférence encore sur toute leur longueur devant l'organe de coupe (6) dans les diviseurs de tiges (16).

7. Mécanisme de coupe (2) selon l'une quelconque des revendications précédentes, **caractérisé en ce que** les auxiliaires de transport (18) ne sont montés de manière flottante dans les diviseurs de tiges (16) qu'à leurs extrémités inférieures.

8. Mécanisme de coupe (2) selon l'une quelconque des revendications précédentes, **caractérisé en ce que** les entraînements (42) sont agencés aux extrémités inférieures des auxiliaires de transport (18) dans les diviseurs de tiges (16).
